(19) Europäisches Patentamt
European Patent Office
Office européen des brevets

(11) Veröffentlichungsnummer: **0 402 573 B1**

(12) **EUROPÄISCHE PATENTSCHRIFT**

(45) Veröffentlichungstag der Patentschrift: **21.09.94**

(51) Int. Cl.⁵: **C08L 95/00**, C08J 11/00

(21) Anmeldenummer: **90104684.7**

(22) Anmeldetag: **13.03.90**

(54) **Verfahren zur Herstellung bituminöser Produkte unter Verwendung von Lackschlämmen.**

(30) Priorität: **16.06.89 DE 3919722**

(43) Veröffentlichungstag der Anmeldung:
**19.12.90 Patentblatt 90/51**

(45) Bekanntmachung des Hinweises auf die
Patenterteilung:
**21.09.94 Patentblatt 94/38**

(84) Benannte Vertragsstaaten:
**AT BE CH DE DK ES FR GB GR IT LI LU NL SE**

(56) Entgegenhaltungen:
**EP-A- 0 119 985**
**EP-A- 0 205 774**

**DATABASE WPIL, Accession Nr. 82-89135E
[42], Derwent Publications Ltd, London, GB; &
JP-A-57 146 934**

**DATABASE WPIL, Accession Nr. 84-008569
[02], Derwent Publications Ltd, London, GB; &
JP-A-58 203 247**

(73) Patentinhaber: **RÜTGERSWERKE AKTIENGE-
SELLSCHAFT**
**Mainzer Landstrasse 217**
**D-60326 Frankturt (DE)**

(72) Erfinder: **Bildner, Karlheinz**
**Odenwaldstrasse 32**
**D-6458 Rodenbach 1 (DE)**
Erfinder: **Hardt, Christian**
**Ziegelhüttenweg 8**
**D-6092 Kelsterbach (DE)**

EP 0 402 573 B1

**Beschreibung**

Die Erfindung betrifft ein Verfahren zur Herstellung bituminöser Produkte unter Verwendung von Lackschlämmen in Form von Folien, Bahnen oder Platten.

Bituminöse Massen werden bei der Herstellung vielfältiger Produkte verwendet, beispielsweise für Dichtungsbahnen, Korrosionsschutzfolien und schwingungsdämpfende Folien. Sie bestehen heute meist aus mit Kunststoffen, Harzen und/oder Wachsen modifiziertem Bitumen und Füllstoffen, die durch Extrudieren, im Guß- oder Streichverfahren u. ä. mit oder ohne Verstärkungseinlagen zu Bahnen bzw. Folien verarbeitet werden.

Aus der DE 31 50 718 A1 ist bekannt, noch reaktionsfähige Lackabfälle nach dem Entwässern bei niedriger Temperatur mit Zuschlagstoffen zu mischen und zu schwingungsdämpfenden Platten zu verarbeiten. Es wird u. a. vorgeschlagen, 20 Gew.-Teile entwässerte Decklackabfällen mit 20 Gew.-Teilen Bitumen, 10 Gew.-Teilen Faserabfälle und 50 Gew.-Teilen Blähton zu mischen und auf einem Walzwerk zu Platten zu formen. Die Kontaktseite der Platten wird mit einem geeigneten Kleber beschichtet. Die daraus ausgestanzten Formteile werden auf die Bodenbleche von Automobilen gelegt und verformen sich beim Durchgang durch die Lackeinbrennstraße, wobei sie sich den Konturen der Bleche anpassen und mit diesen dauerhaft verkleben.

Beim Spritzlackieren von Autokarosserien fallen jährlich viele tausend Tonnen Lackschlämme an, deren Entsorgung wegen der auswaschbaren Bestandteile und des Pigmentanteils problematisch ist und hohe Kosten verursacht. Ziel des bekannten Verfahrens war es daher, für diese Lackschlämme eine Wiederverwendungsmöglichkeit zu finden.

Nachteilig ist an dem Verfahren, daß die Lackschlämme nach einer mechanischen Entwässerung unter 100 °C noch beachtliche Mengen an Restwasser enthalten. Wird dieser entwässerte Lackschlamm mit flüssigem, etwa 180 °C heißem Bitumen gemischt, kommt es zu einer spontanen Verdampfung des Restwassers, die ein sehr starkes Schäumen des Gemisches bewirkt. Um dieses Schäumen zu beherrschen, muß ein ausreichend großes Reaktorvolumen vorhanden sein, und lange Mischzeiten in Kauf genommen werden.

Versuche haben weiterhin gezeigt, daß die nach dem bekannten Verfahren, insbesondere unter Verwendung von Lackschlämmen auf der Basis von Alkyd-Melaminharzen hergestellten Entdöhnungsplatten nach dem Aufbringen im Inneren des Automobils einen unerträglichen Eigengeruch entwickeln.

Aufgabe der Erfindung war es daher, ein verbessertes Verfahren zur Herstellung solcher und ähnlicher bituminöser Produkte zu entwickeln, die keine Geruchsbelästigung verursachen und bei deren Herstellung das Schäumen des heißen Gemisches aus Bitumen und Lackschlamm so stark vermindert wird, daß keine Fertigungsschwierigkeiten entstehen.

Die Aufgabe wird erfindungsgemäß dadurch gelöst, daß für die Herstellung der bituminösen Masse das 150 bis 200 °C heiße Bitumen, beispielsweise in einem Rührwerksbehälter, zunächst mit gebranntem Kalk (Calciumoxid) und einem reaktiven Kohlenwasserstoffharz gemischt und danach der mechanisch entwässerte Lackschlamm und die Füllstoffe zugegeben werden.

Bei der Verwendung von in Dekantierzentrifugen entwässertem Lackschlamm beträgt die Zugabe an gebranntem Kalk 20 bis 40 Gew.-% bezogen auf die Menge des Lackschlamms.

Als reaktives Kohlenwasserstoffharz wird vorzugsweise ein solches mit einer Jodzahl von mindestens 30, vorzugsweise 45 bis 65, verwendet, das in einer Menge von 5 bis 15 Gew.-% bezogen auf den Lackschlamm zugemischt wird.

Statt der Kohlenwasserstoffharze können zur Minderung der Geruchsbelästigung auch Phthalsäureanhydrid oder monomere Acrylate verwendet werden. Beim Einsatz von Phthalsäureanhydrid treten jedoch wegen der Sublimationsneigung Verarbeitungsschwierigkeiten auf, und die bituminösen Produkte sind nicht mehr hinreichend alterungsbeständig. Die monomeren Acrylate scheiden für die hier aufgezeigten Anwendungsbeispiele aus Kostengründen aus.

Als Füllstoffe werden je nach Verwendungszweck der bituminösen Produkte Gesteinsmehl aus Schiefer und Schwerspat, gemahlener Glimmer, Silikathohlkugeln und organische oder anorganische Fasern verwendet, wie sie bei den jeweiligen bekannten bituminösen Produkten üblich sind.

Die erfindungsgemäße bituminöse Masse kann auch weitere Additive wie Thioxtropierungsmittel, Wachse, Weichmacher oder Elastomere in untergeordneten Mengen enthalten.

An bituminösen Folien, die im Automobilbau verwendet werden, werden hohe Anforderungen bezüglich ihrer Kälteflexibilität und Wärmestandfestigkeit gestellt. Sie sollen bei - 25 °C noch flexibel sein und bis 140 °C nicht von einer senkrechten Wand abrutschen. Da übliche gefüllte Bitumina diese Anforderungen nicht erfüllen, wird den Massen üblicherweise ein Elastomer wie z. B. Styrol-Butadien-Kautschuk, zugemischt. In den nachfolgenden Beispielen soll gezeigt werden, daß der Zusatz von Lackschlämmen einen

2

günstigen Einfluß auf das Wärme- und Kälteverhalten der Folien hat, ohne daß die anderen Eigenschaften negativ beeinflußt werden.

Beispiel 1

Für die Herstellung einer Korrosionsschutzfolie werden 78 Gew.-Teile Bitumen B 80 bei 180 °C mit 3 Gew.-Teilen ungelöschten Kalk, 1 Gew.-Teil SBS (Styrol-Butadien-Styrol-Blockpolymer) und 1,4 Gew.-Teilen eines reaktiven Kohlenwasserstoffharzes mit einer Jodzahl von 55 im Rührkessel gemischt. Anschließend werden 10 Gew.-Teile eines Füllerlackrückstandes auf der Basis von Alkyd-Melaminharz mit einem Feststoffgehalt von 69 Gew.-% und 31 Gew.-% Restwasser unter die Mischung gerührt. Dabei entstehen nur geringe Schaummengen in der Größenordnung von 1 Vol .-% bezogen auf das Volumen der Mischung, die aber schnell wieder verschwinden. Danach werden die Füllstoffe (5 Gew.-Teile Gesteinsmehl und 1,6 Gew.-Teile anorganischer Fasern) zugegeben.

Diese Masse wird im Gießverfahren auf einem Kühlband zu Folien verarbeitet, die mit einer Trennfolie kaschiert, perforiert und in der gewünschten Form ausgestanzt werden, wie beispielsweise in der DE 31 41 539 A1 beschrieben.

Die 1 mm dicke Folie hatte eine Kälteflexibilität von - 25 °C und eine Wärmestandsfestigkeit von 140 °C. Ein unangenehmer Eigengeruch war nicht feststellbar.

Eine übliche Korrosionsschutzfolie aus 76 Gew.-% Bitumen, 5 Gew.-% SBS, 2 Gew.-% Naturharz, 1 Gew.-% Wachs, 13 Gew.-% Gesteinsmehl und 3 Gew.-% Fasern hat die gleiche Kälteflexibilität, aber trotz des hohen Elastomeranteils und größerer Fasermenge eine geringere Wärmestandsfestigkeit von 130 °C.

Folgende Richtrezeptur für Korrosionsschutzfolien erfüllen sowohl die in der Aufgabenstellung genannten, als auch die thermischen Anforderungen:

| Bitumen | 66 bis 86 Gew.-% |
|---|---|
| Elastomer | 0,5 bis 1 Gew.-% |
| Calciumoxid | 3 bis 8 Gew.-% |
| Kohlenwasserstoffharz | 0,5 bis 2 Gew.-% |
| Lackschlamm | 5 bis 15 Gew.-% |
| Füllstoffe | 1 bis 13 Gew.-% |

Beispiel 2

Für die Herstellung einer Dämpfungsfolie werden 9 Gew.-Teile Bitumen B 15 und 15 Gew.-Teile Bitumen B 200 wie in Beispiel 1 mit 5 Gew.-Teilen CaO und 2 Gew.-Teilen eines Kohlenwasserstoffharzes mit einer Jodzahl von 55 gemischt. Dann werden 16 Gew.-Teile eines Füllerlackrückstandes auf der Basis von Alkyd-Melaminharz mit einem Feststoffgehalt von 69 Gew.-% und 31 Gew.-% Restwasser unter die Mischung gerührt. Anschließend werden noch 54 Gew.-Teile Gesteinsmehl zugegeben. Aus dieser Masse werden wie in Beispiel 1 Folien hergestellt. Sie haben keinen Lackegeruch und sind bis 150 °C wärmebeständig bei einer Kälteflexibilität von - 30 °C.

Für diese Folien erfüllt folgende Richtrezeptur die gestellten Anforderungen bei üblichen Dämpfungseigenschaften für Schwerfolien:

| Bitumen | 17 bis 27 Gew.-% |
|---|---|
| CaO | 3 bis 10 Gew.-% |
| Kohlenwasserstoffharz | 0,5 bis 3 Gew.-% |
| Lackschlamm | 12 bis 22 Gew.-% |
| Gesteinsmehl | 45 bis 60 Gew.-% |

Beispiel 3

Für die Herstellung einer Dämpfungsfolie mit Breitbandwirkung (gute Dämpfungswirkung über einen weiten Temperaturbereich) werden 17 Gew.-Teile Bitumen B 200 und 14 Gew.-Teile Bitumen B 15 mit 4 Gew.-Teile CaO und 1 Gew.-Teil eines reaktiven Kohlenwasserstoffharzes wie in Beispiel 1 gemischt. Dann werden 12 Gew.-Teile Decklack-Dekanterschlamm mit 65 Gew.-% Feststoffe und 35 Gew.-% Restwasser zugesetzt. Als Füllstoffe werden zum Schluß 10 Gew.-Teile Silikat-Hohlkugeln, 21 Gew.-Teile Glimmer und 21 Gew.-Teile Schiefermehl untergemengt. Die daraus hergestellten Folien haben kein Lackgeruch und werden unterseitig mit einem Schmelzkleber bestrichen, bevor die gewünschten Formen ausgestanzt werden.

Die Folie hat die in der Tabelle wiedergegebenen Eigenschaften, die der einer üblichen Dämpfungsfolie mit Breitbandwirkung aus 35 Gew.-% Bitumen, 3 Gew.-% Kautschuk, und 62 Gew.-% Füllstoffen gegenüber gestellt werden.

Tabelle:

| | Folie gemäß der Erfindung | Folie nach dem Stand der Technik |
|---|---|---|
| Kälteflexibilität (°C) | - 25 | - 25 |
| Wärmestabilität (°C) | 160 | 150 |
| Verlustfaktor einer Folie mit einem Flächengewicht von 3 kg/m² bei 200 Hz bei: | | |
| 10 °C | 0,140 | 0,126 |
| 20 °C | 0,172 | 0,169 |
| 30 °C | 0,175 | 0,152 |
| 40 °C | 0,124 | 0,115 |

**Patentansprüche**

1. Verfahren zur Herstellung von Folien, Bahnen oder Platten aus bituminösen Massen unter Verwendung von Lackschlämmen, **dadurch gekennzeichnet**, daß für die Herstellung der bituminösen Masse das 150 bis 200 °C heiße Bitumen, beispielsweise in einem Rührwerksbehälter, zunächst mit gebranntem Kalk (Calciumoxid) und einem Mittel ausgewählt aus Kohlenwasserstoffharz einer Jodzahl von mindestens 30, Phthalsäureanhydrid oder monomeren Acrylaten gemischt und danach der mechanisch entwässerte Lackschlamm und die Füllstoffe zugegeben werden.

**2.** Verfahren nach Anspruch 1, **dadurch gekennzeichnet**, daß der bituminösen Masse 20 bis 40 Gew.-% gebrannten Kalks bezogen auf die Menge des Lackschlamms zugegeben werden.

**3.** Verfahren nach Anspruch 3, **dadurch gekennzeichnet**, daß der bituminösen Masse 5 bis 15 Gew.-% des Kohlenwasserstoffharzes bezogen auf die Menge des Lackschlamms zugegeben werden.

## Claims

**1.** A process for the preparation of films, strips or plates from bituminous materials using paint sludges, **characterized in that**, in order to prepare the bituminous material, the bitumen at a temperature of from 150 to 200 °C is first mixed, for example in a stirrer tank, with quicklime (calcium oxide) and an agent selected from hydrocarbon resin with an iodine number of at least 30, phthalic anhydride or monomeric acrylates, and the mechanically dehydrated paint sludge and the fillers are then added.

**2.** A process according to Claim 1, **characterized in that** from 20 to 40% by weight of quicklime relative to the quantity of the paint sludge is added to the bituminous material.

**3.** A process according to Claim 3 [*sic*], **characterized in that** from 5 to 15% by weight of the hydrocarbon resin relative to the quantity of the paint sludge is added to the bituminous material.

## Revendications

**1.** Procédé de préparation de feuilles, de bandes ou de plagues à partir de masses bitumineuses avec emploi de boues résiduaires de peinture, caractérisé en ce que, pour la préparation de la masse bitumineuse, le bitume chauffé entre 150 et 200 °C, par exemple dans une cuve à agitation, est tout d'abord mélangé avec de la chaux vive (oxyde de calcium) et un agent choisi parmi une résine d'hydrocarbure ayant un indice d'iode d'au moins 30, l'anhydride phtalique ou des acrylates monomères et est ensuite additionné de la boue résiduaire de peinture déshydratée mécaniquement et des matières de charge.

**2.** Procédé selon la revendication 1, caractérisé en ce que la masse bitumineuse est additionnée de 20 à 40% en poids de chaux vive, rapportés à la quantité de la boue résiduaire de peinture.

**3.** Procédé selon la revendication 2, caractérisé en ce que la masse bitumineuse est additionnée de 5 à 15% en poids de la résine d'hydrocarbure, rapportés à la quantité de la boue résiduaire de peinture.